# EUROPÄISCHE PATENTSCHRIFT

(11) **EP 2 750 953 B1**
(45) Veröffentlichungstag und Bekanntmachung des Hinweises auf die Patenterteilung: **01.04.2020**
(21) Anmeldenummer: 12748183.6
(22) Anmeldetag: 06.08.2012
(51) Int. Cl.: B61F 5/08, B61F 5/10

(54) **FEDERSPERRE FÜR SEKUNDÄRFEDER**
SPRING LOCK FOR SECONDARY SPRING
DISPOSITIF DE BLOCAGE D'UN RESSORT SECONDAIRE

(30) Priorität: 30.08.2011 AT 12392011
(43) Veröffentlichungstag der Anmeldung: 09.07.2014
(73) Patentinhaber: Siemens Mobility Austria GmbH, 1210 Wien (AT)
(72) Erfinder: KREUZWEGER, David, A-8010 Graz (AT)
(74) Vertreter: Deffner, Rolf
(86) Internationale Anmeldenummer: PCT/EP2012/065314
(87) Internationale Veröffentlichungsnummer: WO 2013/029924

(56) Entgegenhaltungen:
- EP-A1- 0 254 084
- EP-A2- 0 229 930
- DE-B- 1 139 867
- US-A- 2 108 124

## Beschreibung

Die Erfindung betrifft einen Wagenkasten und ein Untergestell eines Schienenfahrzeugs, aufweisend eine Sekundärfeder mit Federsperre, wobei die Sekundärfeder zwischen dem Wagenkasten und dem Untergestell angeordnet ist, und wobei ein entfernbares Sperrelement vorgesehen ist.

Aus dem Stand der Technik ist beispielsweise die EP 0 254 084 A1 bekannt, in der eine Fluidfedervorrichtung offenbart ist, welche zur Federhöhenbegrenzung eine Abblasleitung, einen Hubschalter sowie eine Zugstange aufweist.

Weiterhin zeigt die DE 11 39 867 B eine Gummifeder für eine einem Wagenkasten und einem Fahrwerk eines Schienenfahrzeugs zwischengeordnete Wiege. Hohlzylindrische Federblöcke der Gummifeder sind über einen Spannbolzen geführt.

Ferner ist in der US 2 108 124 A eine Federvorrichtung für ein Schienenfahrzeug beschrieben, wobei Komponenten dieser Federanordnung durch einen mittig verlaufenden Bolzen arretiert sind und ein Federungsgrundzustand der Federvorrichtung mittels des Bolzens eingestellt ist.

Bei Schienenfahrzeugen führt der Radverschleiß zu einer Reduktion der Höhe der Lage des Wagenkastens.

Bei Einfahrten in eine Station kann es daher vorkommen, dass das Niveau eines in dem Wagenkasten angeordneten Fußbodens unter dem Fußbodenniveau der Station zu liegen kommt. Durch den Niveauunterschied zwischen der Station und der Fußbodenoberkante des Wagenkastens kann es zur Bildung einer Stufe im Übergangsbereich zwischen Schienenfahrzeug und Station kommen. Diese Stufen stellen ein beträchtliches Sicherheitsrisiko für Passagiere dar, daher wird nach dem Stand der Technik dieser Höhenverlust durch Radverschleiß dadurch ausgeglichen, dass der Wagenkasten gegenüber dem Untergestell, einem Fahrwerk oder Drehgestell angehoben wird. Dazu werden unter die den Wagenkasten stützenden Sekundärfedern Verschleißbeilagen in Form von Metall oder Kunststoffscheiben geschoben.

Zur Montage der Verschleißbeilagen muss in einer Werkstätte der Wagenkasten soweit angehoben werden, dass sich die Sekundärfeder vom Untergestell löst. Dazu müssen üblicherweise die Verbindungen zwischen Wagenkasten und Untergestelle, wie Kabel oder Schläuche und die Abhebesicherung der Feder demontiert werden. Dies ist mit erheblichem Aufwand verbunden. Der Erfindung liegt daher die Aufgabe zugrunde, diesen Aufwand zu verringern.

Erfindungsgemäß geschieht dies mit einem Wagenkasten und einem Untergestell eines Schienenfahrzeuges nach Anspruch 1.

Damit ist das Sperrelement besonders einfach zu handhaben, es wird kein zusätzliches Werkzeug für die Befestigung benötigt.

Als Alternative zu einer Schraubverbindung kann ein Bajonettverschluss oder eine Klinke vorgesehen werden.

Darüber hinaus wird ein zusätzlicher Sicherheitsaspekt dadurch erfüllt, dass das Sperrelement aus dem Boden des Wagenkastens hervorragt und somit auf einfache Weise die Kontrolle ermöglicht ist, ob nach Abschluss der Montagearbeiten die Sperrelemente auch wieder entfernt worden sind.

Die Erfindung wird anhand von Figuren näher erläutert. Es zeigen beispielhaft:
Figur 1 eine erfindungsgemäße Federsperre mit einer Konusfeder als Sekundärfeder in einer ersten bevorzugten Ausführungsform
Fig. 2 eine Federsperre mit einer Konusfeder als Sekundärfeder in einer zweiten bevorzugten Ausführungsform.
Figur 3 eine erfindungsgemäße Federsperre mit einer Luftfeder als Sekundärfeder in einer ersten bevorzugten Ausführungsform
Fig. 4 eine Federsperre mit einer Luftfeder als Sekundärfeder in einer zweiten bevorzugten Ausführungsform.
Figur 5 eine erfindungsgemäße Federsperre mit einer Schraubenfeder als Sekundärfeder in einer ersten bevorzugten Ausführungsform
Fig. 6 eine Federsperre mit einer Schraubenfeder als Sekundärfeder in einer zweiten bevorzugten Ausführungsform.

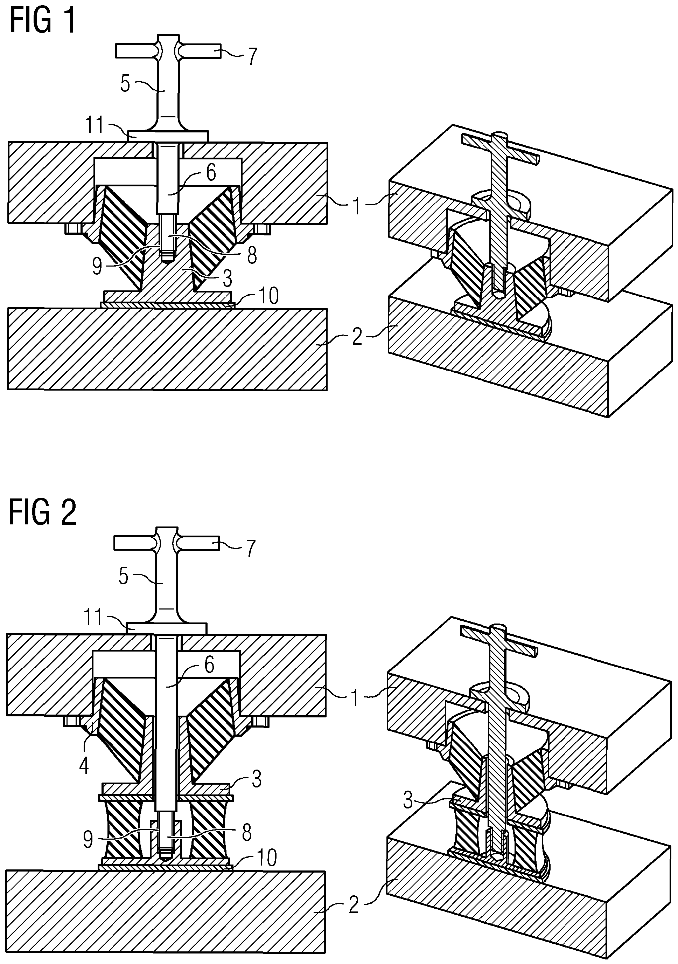

Die Darstellung gemäß Fig. 1 zeigt einen Ausschnitt eines Wagenkastens 1 und eines Untergestelles 2, also Fahrwerkes oder Drehgestelles eines Schienenfahrzeuges. Zwischen den beiden ist eine Konusfeder als Sekundärfeder 3 angeordnet. Dazu ist anzumerken, dass die Zahl der Sekundärfedern 3 zwischen Wagenkasten 1 und Untergestell 2 variieren kann, typisch sind beispielsweise zwei oder vier Federn.

In dem Wagenkasten 1 ist oberhalb jeder Sekundärfeder 3 eine im Betriebszustand verschließbare Ausnehmung vorgesehen, durch welche der zylinderförmige Schaft 6 des Sperrelementes 5 in montiertem Zustand ragt. Im Wagenkasten 1 selbst ragt das Sperrelement 5 mit seinem oberen Ende des zylinderförmigen Schaftes 6 und dem Quergriff 7 aus dem Boden und ist damit gut sichtbar. Damit kann sehr schnell überprüft werden, ob die Arretierung der Sekundärfedern 3 erfolgt ist, bzw. diese nach Abschluss der Montagearbeiten auch wieder gelöst wurde.

An seinem unteren Ende weist der zylinderförmige Schaft 6 ein Gewinde 8 auf, welches mit einem entsprechenden Gegenstück 9 der Sekundärfeder 3 verschraubt wird. Zusätzlich ist am zylinderförmigen Schaft 6 ein tellerartiges Abstützelement 11 in geeigneter Höhe festgelegt, welches sich auf dem Wagenkasten 1 bzw. einer geeigneten Verstärkung desselben abstützt und so eine Verschiebung des Sperrelementes 5 nach unten verhindert. Es ist dabei auch zweckmäßig, wenn das Abstützelement 11 am zylinderförmigen Schaft 6 an verschiedenen Positionen befestigt werden kann und so an unterschiedliche Anforderungen beispielsweise bei unterschiedlichen Federformen angepasst werden kann. Dies kann beispielsweise durch ein weiteres Gewinde am zylinderförmigen Schaft 6 geschehen, womit eine stufenlose Verstellung der Höhe des tellerartigen Abstützelementes 11 ermöglicht wird.

Nach der Verschraubung des Sperrelementes 5 mit der Sekundärfeder 3 können nun der Wagenkasten 1 angehoben werden und die Verschleißbeilagen 10 unter den Sekundärfedern 3 angebracht werden.

Alternativ zu einem Gewinde kann der annähernd zylinderförmigen Schaft 6 des Sperrelementes 5 an seinem unteren Ende einen Bajonettverschluss oder aber auch beispielsweise eine Kralle aufweisen, mittels dem das Sperrelement 5 im montierten Zustand mit einem entsprechenden Gegenstück der Sekundärfeder3 verbunden ist.

Fig. 1 zeigt eine Konusfeder als Sekundärfeder 3 in einer ersten einteiligen Ausführungsform, die Erfindung ist aber in gleicher Weise auch bei Sekundärfedern mit andern Ausführungsformen anwendbar, wie beispielsweise bei einer mehrteiligen Sekundärfeder 3, wie sie in Fig. 2 dargestellt ist.

In gleicher Weise kann die Erfindung auch bei Luftfedern 12 und Schraubenfedern 13 als Sekundärfedern eingesetzt werden, wie sie in den Figuren, 3, 4, 5 und 6 dargestellt sind.

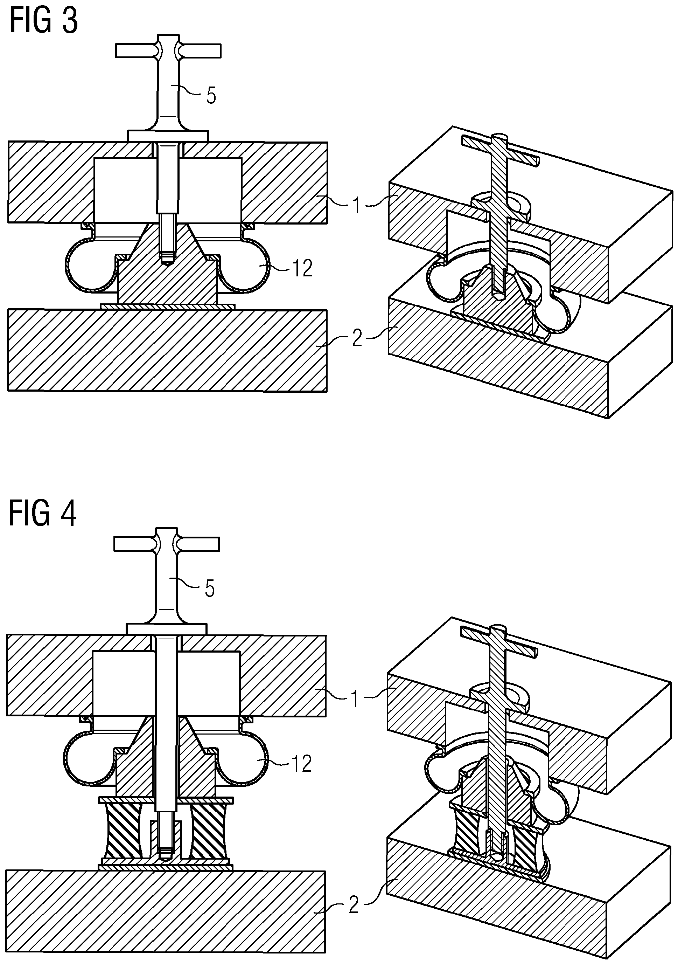

Bei Luftfedern 12 gemäß den schematischen Darstellungen in Fig. 3 und Fig. 4 ist es zweckmäßig den belüfteten Raum an der Oberseite mit einem dichten Verschluss zu vorsehen, der bei Bedarf geöffnet wird, um das Sperrelement 5 mit der Luftfeder 12 zu verbinden.

Es ist ebenso möglich das System umzudrehen, die Feder 3, 12, 13 (Konus-, Luft-, oder Schraubenfeder) an das Untergestell 2 zu spannen und nach dem Anheben des Wagenkastens 1 die Verschleißbeilagen 10 an der Oberseite der Feder, zwischen Feder und Wagenkasten 1 einzulegen.

Es ist für manche Anwendungsbereiche zweckmäßig, wenn die Sekundärfeder 3, 12, 13 mehrteilig aufgebaut ist.

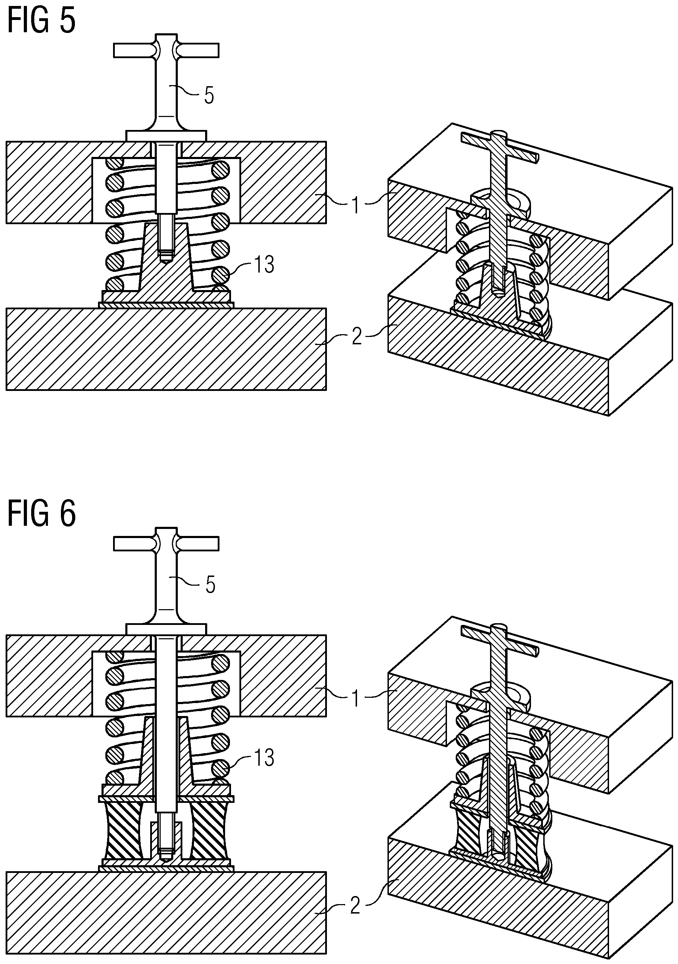

Dieser mehrteilige Aufbau kann beispielsweise die Kombination einer Konusfeder mit einer Gummifeder umfassen wie es in Fig. 2 dargestellt ist, weitere zweckmäßige Varianten sind auch die Kombination einer Luftfeder 12 mit einer Gummifeder gemäß Fig. 4 und die Kombination Schraubenfeder 13 und Gummifeder gemäß Fig. 6.

Bei diesen Kombinationen kann es vorteilhaft sein, nur einen Teil, vorzugsweise den weicheren Teil der Feder 3, 12, 13 mittels Sperrelement 5 zu arretieren.

Es kann für bestimmte Anwendungsfälle aber auch vorteilhaft sein, beide Teile zu arretieren.

### Bezugszeichenliste

- 1: Wagenkasten
- 2: Untergestell
- 3: Konusfeder als Sekundärfeder
- 4: Federtopf
- 5: Sperrelement
- 6: zylinderförmiger Schaft
- 7: Quergriff
- 8: Gewinde
- 9: Gegenstück
- 10: Verschleißbeilagen
- 11: Abstützelement
- 12: Luftfeder
- 13: Schraubenfeder

## Patentansprüche

1. Wagenkasten und Untergestell eines Schienenfahrzeugs, aufweisend eine Sekundärfeder mit Federsperre, wobei die Sekundärfeder zwischen dem Wagenkasten und dem Untergestell angeordnet ist, und wobei ein entfernbares Sperrelement (5) vorgesehen ist, **dadurch gekennzeichnet, dass** sich das Sperrelement (5) im montierten Zustand auf dem Wagenkasten (1) abstützt und durch eine Ausnehmung im Wagenkasten hindurch ragt und so mit der Sekundärfeder (3, 12, 13) verbunden ist, dass dieselbe an einer Ausdehnung gehindert ist.

2. Wagenkasten und Untergestell eines Schienenfahrzeuges nach Anspruch 1, **dadurch gekennzeichnet, dass** die Sekundärfeder (3) eine Konusfeder ist, die über einen Federtopf (4) mit dem Wagenkasten (1) verbunden ist.

3. Wagenkasten und Untergestell eines Schienenfahrzeuges nach Anspruch 1, **dadurch gekennzeichnet, dass** die Sekundärfeder eine Luftfeder (12) ist, die mit dem Wagenkasten (1) verbunden ist.

4. Wagenkasten und Untergestell eines Schienenfahrzeuges nach Anspruch 1, **dadurch gekennzeichnet, dass** die Sekundärfeder eine Schraubenfeder (13) ist, die mit dem Wagenkasten (1) verbunden ist.

5. Wagenkasten und Untergestell eines Schienenfahrzeuges nach einem der Ansprüche 1 bis 4, **dadurch gekennzeichnet, dass** die Sekundärfeder (3, 12, 13) mehrteilig aufgebaut ist, wobei nur ein Teil, vorzugsweise der weichere Teil der Sekundärfeder (3, 12, 13) blockiert wird.

6. Wagenkasten und Untergestell eines Schienenfahrzeuges nach einem der Ansprüche 1 bis 5, **dadurch gekennzeichnet, dass** das Sperrelement (5) einen zumindest annähernd zylinderförmigen Schaft (6) mit einem Quergriff (7) an seinem oberen Ende aufweist und dass der annähernd zylinderförmigen Schaft (6) an seinem unteren Ende ein Gewinde (8) aufweist und dass am Schaft ein Abstützelement (11) festgelegt ist und dass das Sperrelement (5) mittels Gewinde (8) im montierten Zustand mit einem entsprechenden Gegenstück der Sekundärfeder (3, 12, 13) verschraubt ist.

7. Wagenkasten und Untergestell eines Schienenfahrzeuges nach einem der Ansprüche 1 bis 5, **dadurch gekennzeichnet, dass** das Sperrelement (5) einen zumindest annähernd zylinderförmigen Schaft (6) mit einem Quergriff (7) an seinem oberen Ende aufweist und dass der annähernd zylinderförmigen Schaft (6) an seinem unteren Ende einen Bajonettverschluss aufweist und dass am Schaft ein Abstützelement (11) festgelegt ist und dass das Sperrelement (5) mittels Bajonettverschluss im montierten Zustand mit einem entsprechenden Gegenstück der Sekundärfeder (3, 12, 13) verbunden ist.

## Claims

1. Car body and underframe of a rail vehicle, having a secondary spring with spring lock, wherein the secondary spring is arranged between the car body and the underframe, and wherein a removable spring locking element (5) is provided, **characterised in that** in the mounted state the spring locking element (5) is supported on the car body (1) and projects through a cut-out in the car body and thus is connected to the secondary spring (3, 12, 13) such that the same is prevented from extending.

2. Car body and underframe of a rail vehicle according to claim 1, **characterised in that** the secondary spring (3) is a conical spring, which is connected to the car body (1) by way of a spring retainer (4).

3. Car body and underframe of a rail vehicle according to claim 1, **characterised in that** the secondary spring is a pneumatic spring (12), which is connected to the car body (1).

4. Car body and underframe of a rail vehicle according to claim 1, **characterised in that** the secondary spring is a helical spring (13), which is connected to the car body (1).

5. Car body and underframe of a rail vehicle according to one of claims 1 to 4, **characterised in that** the secondary spring (3, 12, 13) is embodied in several parts, wherein only one part, preferably the softer part of the secondary spring (3, 12, 13), is blocked.

6. Car body and underframe of a rail vehicle according to one of claims 1 to 5, **characterised in that** the spring locking element (5) has an at least approximately cylindrical shaft (6) with a T-handle (7) on its upper end and that the approximately cylindrical shaft (6) has a thread (8) on its lower end and that a supporting element (11) is fixed to the shaft and that the spring locking element (5) is screwed by means of a thread (8) to a corresponding counterpart of the secondary spring (3, 12, 13) in the mounted state.

7. Car body and underframe of a rail vehicle according to one of claims 1 to 5, **characterised in that** the spring locking element (5) has an at least approximately cylindrical shaft (6) with a T-handle (7) on its upper end and that the approximately cylindrical shaft (6) has a bayonet coupling on its lower end and that a supporting element (11) is fixed to the shaft and that the spring locking element (5) is connected means of a bayonet coupling in the mounted state to a corresponding counterpart of the secondary spring (3, 12, 13).

## Revendications

1. Caisse et châssis d'un véhicule ferroviaire, comprenant un ressort secondaire comportant un bloqueur de ressort, le ressort secondaire étant disposé entre la caisse et le châssis, et un élément de bloquage amovible étant prévu (5), **caractérisés en ce que** l'élément de bloquage (5), à l'état assemblé, s'appuie sur la caisse (1) et fait saillie à travers un évidement prévu dans la carrosserie pour ainsi être relié au ressort secondaire (3, 12, 13) de manière à éviter un étirement de ce dernier.

2. Caisse et châssis d'un véhicule ferroviaire selon la revendication 1, **caractérisés en ce que** le ressort secondaire (3) est un ressort conique relié à la caisse (1) par l'intermédiaire d'une coupelle de ressort (4).

3. Caisse et châssis d'un véhicule ferroviaire selon la revendication 1, **caractérisés en ce que** le ressort secondaire est un ressort pneumatique (12) relié à la caisse (1).

4. Carrosserie et châssis d'un véhicule ferroviaire selon la revendication 1, **caractérisés en ce que** le ressort secondaire est un ressort hélicoïdal relié à la caisse (1).

5. Caisse et châssis d'un véhicule ferroviaire selon l'une des revendications 1 à 4, **caractérisés en ce que** le ressort secondaire (3, 12, 13) est réalisé en plusieurs parties, seule une partie du ressort secondaire (3, 12, 13) étant bloquée, de préférence la partie plus souple.

6. Caisse et châssis d'un véhicule ferroviaire selon l'une des revendications 1 à 5, **caractérisés en ce que** l'élément de bloquage (5) présente une tige (6) de forme au moins approximativement cylindrique comportant une poignée transversale (7) à son extrémité supérieure, et **en ce que** la tige (6) approximativement cylindrique présente un filetage (8) à son extrémité inférieure et **en ce qu'**un élément de support (11) est fixé sur la tige et que l'élément de bloquage (5), à l'état assemblé, est vissé sur une pièce complémentaire correspondante du ressort secondaire (3, 12, 13) grâce au filetage (8).

7. Caisse et châssis d'un véhicule ferroviaire selon l'une des revendications 1 à 5, **caractérisés en ce que** l'élément de bloquage (5) présente une tige (6) de forme au moins approximativement cylindrique comportant une poignée transversale (7) à son extrémité supérieure et **en ce que** la tige (6) approximativement cylindrique présente une fermeture à baïonnette à son extrémité inférieure et **en ce qu'**un élément de support (11) est fixé sur la tige et que l'élément de bloquage (5), à l'état assemblé, est relié à une pièce complémentaire correspondante du ressort secondaire (3, 12, 13) grâce à la fermeture à baïonnette.
